# EUROPÄISCHE PATENTSCHRIFT

(11) **EP 3 122 956 B1**
(45) Veröffentlichungstag und Bekanntmachung des Hinweises auf die Patenterteilung: **28.07.2021**
(21) Anmeldenummer: 15712840.6
(22) Anmeldetag: 19.03.2015
(51) Int. Cl.: E04F 13/08, E04C 2/288, E04C 1/41, E04B 2/02, E04B 1/94, E04B 1/76, E04F 13/14, B29K 25/00, B29K 75/00, B29C 44/18, B29L 31/00

(54) **DÄMMZIEGEL FÜR EINE MEHRSCHICHTIGE WAND, DAMIT VERSEHENE MEHRSCHICHTIGE WAND SOWIE HIERAUS AUSGEBILDETES GEBÄUDE UND VERFAHREN ZUM ERSTELLEN EINER MEHRSCHICHTIGEN WAND**
INSULATION BRICK FOR A MULTI-LAYERED WALL, MULTI-LAYER WALL PROVIDED THEREWITH AND BUILDING BUILT FROM SAME, AND METHOD FOR PRODUCING A MULTI-LAYERED WALL
BRIQUE D'ISOLATION POUR MUR MULTICOUCHE, MUR MULTICOUCHE POURVU D'UNE TELLE BRIQUE ET BÂTIMENT FORMÉ À UN TEL MUR ET PROCÉDÉ D'ÉRECTION D'UN MUR MULTICOUCHE

(30) Priorität: 27.03.2014 DE 102014104319
(43) Veröffentlichungstag der Anmeldung: 01.02.2017
(73) Patentinhaber: Kellerer, Michael, 82281 Oberweikertshofen (DE)
(72) Erfinder: Kellerer, Michael, 82281 Oberweikertshofen (DE)
(74) Vertreter: Kuhnen & Wacker Patent- und Rechtsanwaltsbüro PartG mbB
(86) Internationale Anmeldenummer: PCT/EP2015/055802
(87) Internationale Veröffentlichungsnummer: WO 2015/144559

(56) Entgegenhaltungen:
- EP-A1- 1 936 067
- EP-A2- 0 397 598
- WO-A1-90/11419
- DE-A1- 2 048 387
- DE-A1-102004 043 494
- FR-A1- 2 573 110
- GB-A- 2 497 569
- None

## Beschreibung

Die Erfindung betrifft einen Dämmziegel für eine mehrschichtige Wand, welcher als Langlochziegel ausgebildet ist, mit zwei Außenlängsstegen und zwei Außenquerstegen, welche Lagerfugenflächen bilden, wenigstens einem sich parallel zu den Lagerfugenflächen erstreckenden Verfüllkanal, sowie mit wenigstens einer Aufnahme für eine Halteeinrichtung, welche an den Dämmziegel angeformt und im Querschnitt hakenförmig ausgebildet ist, so dass die Aufnahme einen Formschluss mit der Halteeinrichtung herstellt. Ferner betrifft die Erfindung eine mehrschichtige Wand und ein Gebäude mit einem solchen Dämmziegel sowie ein Verfahren zum Erstellen einer mehrschichtigen Wand mit einem solchen Dämmziegel.

Eine solcher Dämmziegel sowie eine solche mehrschichtige Wand und ein solches Gebäude sind aus der FR 2 573 110 A1 bekannt.

Mit den zunehmenden Anforderungen an die Energieeffizienz von Gebäuden, sei es im Bestand oder Neubau, kommt der Dämmung von Außenwänden eine immer größere Bedeutung zu. In den vergangenen Jahren wurden hierzu sehr umfangreich Wärmedämm-Verbundsysteme installiert, wodurch eine deutliche Reduzierung des Energieverbrauchs erreicht werden konnte. Bei diesen werden Dämmlagen außenseitig an die Fassade geklebt bzw. gedübelt. Als Dämmmaterial kommen dabei überwiegend geschäumte Kunststoffe zum Einsatz, wobei in geringerem Umfang jedoch auch Mineralwolleplatten verwendet werden. Außenseitig sind diese Dämmlagen mit einer dünnen Putzschicht vor Witterungseinflüssen geschützt.

Im Laufe der Zeit hat sich jedoch gezeigt, dass derartige Wärmedämm-Verbundsysteme auch erhebliche Nachteile aufweisen: Zu nennen sind hier insbesondere die relativ hohen Instandhaltungskosten, da solche Systeme zu einer Veralgung neigen, weshalb etwa alle fünf Jahre ein neuer Anstrich erforderlich ist. Die hierfür verwendeten Farben sind zudem in der Regel mit Fungiziden und Pestiziden versehen, wodurch ein Algenwachstum zwar eingedämmt werden kann, zugleich jedoch Giftstoffe im Wohnbereich vorliegen. Ein weiteres Problem derartiger Systeme liegt in der geringen Widerstandsfähigkeit gegenüber mechanischen Beschädigungen zum Beispiel aufgrund von Hagelschlag oder der Einwirkung von Vögeln. Darüber hinaus ist es auch schwierig, hier Lampen oder dergleichen an derartigen Wärmedämm-Verbundsystemen, d.h. an der Fassade eines Gebäudes zu befestigen.

Sofern die Dämmlage eines derartigen Wärmedämm-Verbundsystems aus geschäumten Kunststoffen gebildet ist, was in der Praxis überwiegend der Fall ist, liegt ein weiterer wesentlicher Nachteil in der damit verbundenen Brandgefahr. Hier reicht unter ungünstigen Umständen eine Brandquelle im Sockelbereich aus, um letztendlich die gesamte Fassade in Flammen zu setzen oder wenigstens zum Schmelzen zu bringen. Hierbei entstehen giftige Rauchgase, welche besonders problematisch sind.

Daneben ist es auch bekannt geworden, bei vorgehängten, hinterlüfteten Fassaden Ziegelelemente einzusetzen, welche in der Regel nach Art eines Langlochziegels ausgebildet sind. Die Dokumente EP 1 936 067 A1 und FR 2 573 110 A1 zeigen Beispiele hierfür. Diese Fassadenziegel sind an horizontal ausgerichteten Halteelementen eingehängt, welche an aufrechten Stützen positioniert sind. Auf diese Weise wird der dahinter angeordnete Wandaufbau verdeckt oder vor Witterungseinflüssen geschützt. Da kalte Luft kaminartig hinter der hinterlüfteten Fassade nach oben an der Gebäudewand entlang streicht, lässt sich eine Dämmwirkung des Wandaufbaus hierdurch jedoch kaum oder nur im Sommer gegen allzu große Wärmestrahlung verbessern.

Als Alternative zu Wärmedämm-Verbundsystemen konnten sich in den vergangenen Jahren zunehmend auch Hochlochziegel mit einer Dämmfüllung am Markt durchsetzen. Da bei diesen Mauersystemen außenseitig ein Ziegelsteg vorliegt, besteht hier kein Problem hinsichtlich der mechanischen Festigkeit wie auch der Gefahr eines Algenwachstums. Andererseits lassen sich hierdurch in der Regel nicht ganz so gute Dämmeigenschaften erzielen. Zudem sind die typischerweise großformatigen Hochlöcher derartiger Verfüllziegel zumeist ebenfalls mit geschäumten Kunststoffen gefüllt, so dass auch hier brennbares Material vorliegt.

Ein Beispiel für einen derartigen Wärmedämm-Verfüllziegel geht aus der DE 10 2004 043 494 A1 hervor, der eine Ziegelmanteldämmplatte für ein zwei- oder mehrschaliges Außenmauerwerk als Vormauerschale offenbart. Der hier gezeigte Dämmziegel wird dabei als zusätzliches Wärmedämmelement außenseitig vor bestehenden Ziegelwänden bei Neu- und Altbauten in an sich herkömmlicher Weise aufgemauert und mittels Mauerspreizdübeln oder dergleichen im Mauerflächenbereich zusätzlich am tragenden Wandelement befestigt.

Ein weiteres Beispiel für einen derartigen Wärmedämmziegel bzw. ein damit ausgebildetes mehrschaliges Mauerwerk geht aus der EP 1 905 914 A2 hervor. Auch hier ist der Wärmedämmziegel als Hochlochziegel mit großformatigen Hochlöchern ausgebildet, in welche ein Dämmkern eingebracht ist. Als Basis für die Vormauerung dient eine Sockelschiene, auf welcher dann die Verfüllziegel in herkömmlicher Weise im Mauerverbund übereinander vermauert werden. Zusätzlich zu der Abstützung des Vormauerwerks im Sockelbereich kann dieses noch über Verankerungselemente und/oder Haftmittel mit dem tragenden Wandelement verbunden sein.

Aus der DE 20 2011 106 987 U1 ist ebenfalls ein Wärmedämmziegel in Gestalt eines Hochlochziegels bekannt geworden, der einen großformatigen Verfüllkanal aufweist, welcher mit einem Wärmedämmmaterial verfüllt ist. Auch hierdurch lässt sich ein zweischaliges Mauerwerk mit guten Wärmedämmeigenschaften herstellen. Die aus diesen Wärmedämmziegeln erstellte Vorsatzschale stützt sich dabei wiederum auf einer Sockelschiene im unteren Bereich der Außenwand ab und ist dort in an sich herkömmlicher Weise aufgemauert. Sie kann zusätzlich über Verankerungselemente mit dem tragenden Wandelement verbunden sein.

Eine unmittelbare Weiterbildung dieses Systems zur Vermeidung des Aufwands für die Bereitstellung einer Abstützung im Sockelbereich ergibt sich noch aus dem deutschen Gebrauchsmuster DE 20 2012 008 827 U1. Hier ist es vorgesehen, die mit einem Dämmkern versehenen Hochlochziegel direkt an das tragende Wandelement anzukleben und so die zusätzliche Ziegelwandschicht auszubilden.

In all diesen herkömmlichen Hochlochziegel-Vormauersystemen mit einer Dämmfüllung ist die Brandgefahr gegenüber einem Wärmedämm-Verbundsystem zwar gemindert, jedoch nicht zuverlässig beseitigt. Insbesondere hat sich gezeigt, dass Brände auch hier verheerende Auswirkungen mit sich bringen können. Sofern infolge einer Beschädigung des Mauerwerks oder aus anderen Gründen beim Ausbruch eines Brandes ein Zutritt zur Dämmfüllung möglich wird, was typischerweise im unteren, frei zugänglichen Bereich des Mauerwerks der Fall ist, kann sich die Dämmfüllung in diesen Hochlochziegeln entzünden und so ein Brand entstehen, der auch die gesamte Fassade ergreifen kann. Hierbei bersten die Ziegel in der Regel aufgrund der Wärmeentwicklung und der damit verbundenen Expansion des Dämmkerns, so dass ein Sauerstoffzutritt zum brennenden Dämmkern fortwährend möglich ist und sich der Brand nicht selbstständig löscht. Dabei besteht auch die Gefahr eines Übergreifens des Brandes auf den Dachstuhl.

Der Erfindung liegt daher die Aufgabe zu Grunde, einen verbesserten Dämmziegel für eine mehrschichtige Wand bereitzustellen, durch den ein wirksamerer Brandschutz erzielbar ist. Darüber hinaus soll auch eine dementsprechend verbesserte mehrschichtige Wand bzw. ein solches Gebäude und schließlich ein Verfahren zum Erstellen einer derartigen mehrschichtigen Wand aufgezeigt werden.

Diese Aufgabe wird gemäß einem ersten Aspekt der Erfindung durch einen Dämmziegel mit den Merkmalen des Anspruches 1 gelöst. Dieser zeichnet sich insbesondere dadurch aus, dass er der Verfüllkanal mit einem Dämmmaterial ausgefüllt ist, und dass die wenigstens eine Aufnahme in einem Eckbereich zwischen einem Außenquersteg und einem Außenlängssteg ausgebildet ist.

Im Rahmen der Erfindung wurde erkannt, dass das ungünstige Brandverhalten herkömmlicher Vorsatzschalen darauf beruht, dass die Verfüllkanäle der bislang verwendeten Hochlochziegel letztendlich eine Art "Kamin" innerhalb des Mauerwerks ausbilden, welcher vom Sockelbereich bis unter das Dach eines Gebäudes reicht. Durch die zumeist plangeschliffenen, oben und unten offenen Lagerfugenflächen dieser Hochlochziegel steht hier nämlich der Dämmkern eines Dämmziegels in direkter Verbindung mit dem Dämmkern des darüber vorliegenden Dämmziegels. Damit ist ein direkter Brandübertritt möglich und es tritt eine Art "Kamineffekt" auf, wodurch sich ein derartiger Brand relativ schnell ungehindert innerhalb des Mauersteins und vom Sockelbereich bis unter das Dach ausbreiten kann.

Auf Basis dieser Erkenntnisse nimmt die vorliegende Erfindung nun Abkehr von herkömmlichen Bauweisen und setzt gezielt anstelle der bekannten Hochlochziegel einen Langlochziegel als Dämmziegel ein. Diese Ziegelart, welche angesichts ihrer vergleichsweise geringen statischen Tragfähigkeit bei der Wanderstellung in der Praxis kaum Anwendung findet, hat im Hinblick auf das der Erfindung zu Grunde liegende Problem jedoch den Vorteil, dass sich der Verfüllkanal parallel zur Lagerfugenfläche des Dämmziegels erstreckt, das heißt horizontal ausgerichtet ist. Ordnet man mehrere derartiger Langlochziegel übereinander an, wie dies für die Ausbildung einer dämmenden Ziegelwandschicht erforderlich ist, so stehen die Dämmkerne übereinander angeordneter Langlochziegel gerade nicht in direkten Kontakt zueinander. Stattdessen befinden sich zwei Außenquerstege der Dämmziegel als trennendes Element dazwischen.

Damit wird erfindungsgemäß eine zeilenweise Abschottung innerhalb der dämmenden Ziegelwandschicht erzielt. Eine Ausbreitung von Feuer ist hier nur noch in horizontaler Richtung, jedoch nicht mehr vertikal so ohne weiteres möglich, weshalb gerade der Kamineffekt vermieden wird. Damit verlöscht ein evtl. Brand zudem einfacher ohne eine Einwirkung von außen.

Darüber hinaus eröffnet die erfindungsgemäß erstmals vorgesehene Verwendung von Langlochziegeln als Dämmziegel völlig neue konstruktive Möglichkeiten: Von Bedeutung ist hier, dass derartige Ziegelelemente stranggepresst werden und somit einen von einer Matrize vorgegebenen Querschnitt aufweisen. Bei Langlochziegeln ist die Strangpressrichtung gegenüber jener bei Hochlochziegel um 90° gedreht, wenn man die Einbaulage der jeweiligen Ziegel im Mauerwerk betrachtet. Dadurch ist es erfindungsgemäß möglich, eine Aufnahme für eine Halteeinrichtung direkt an den Dämmziegel anzuformen. Dies ist bei einem Hochlochziegel nicht möglich, da die Strangpressrichtung hier gleichgerichtet zur Wirkrichtung der Schwerkraft ist; hier müsste in einem weiteren Fertigungsschritt manuell eine Nachbearbeitung des Ziegelkörpers erfolgen. Damit lässt sich der erfindungsgemäße Dämmziegel aufgrund seiner Langlochgestalt besonders günstig fertigen.

Zugleich lässt sich der erfindungsgemäße Dämmziegel dann ohne weitere Hilfsmittel direkt an einer geeigneten Halteeinrichtung oder dgl. am tragenden Wandelement anbringen bzw. anhängen. Hierdurch ist eine besonders einfache Montage einer zusätzlichen Ziegelwandschicht an einem tragenden Wandelement möglich.

Dabei spielt es auch keinerlei Rolle, ob das tragende Wandelement nun ein Altbestand ist oder eine neu geschaffene Wand. Gleichermaßen ist es unerheblich, ob es sich hierbei um eine Ziegelwand, eine Betonwand, eine Wand aus Kalksandstein oder dgl. handelt. Der erfindungsgemäße Dämmziegel lässt sich somit vielfältig anwenden. Insbesondere ist damit eine effiziente energetische Sanierung von Bestandsbauten möglich.

Darüber hinaus stellt er jedoch gleichermaßen nach wie vor einen Verfüllkanal mit einem großen Querschnitt bereit, so dass ein großformatiger Dämmkern hierin vorliegen kann. Dies erlaubt es, besonders gute Dämmeigenschaften zu erzielen. In praktischen Versuchen hat sich gezeigt, dass hier ein Wert der äquivalenten Wärmeleitfähigkeit mit λ < 0,050 W/mK ohne weiteres erreichbar ist und sich unter besonders günstigen Umständen sogar Werte um λ = 0,040 W/mK erzielen lassen.

Gleichzeitig werden auch mit dem erfindungsgemäßen Dämmziegel weiterhin die oben dargelegten Nachteile herkömmlicher Wärmedämm-Verbundfassaden insbesondere im Hinblick auf die geringe mechanische Festigkeit, die Veralgung etc. vermieden. Stattdessen bietet der erfindungsgemäße Dämmziegel eine Außenfläche an, welche aus einem Ziegelsteg besteht und somit einen guten und stabilen Putzgrund anbietet.

Außenseitig ist an wenigstens einem der Außenlängsstege eine Mehrzahl von Rillen ausgebildet, welche sich parallel zum Verfüllkanal erstrecken. Dadurch lässt sich hier eine vergrößerte Oberfläche bereitstellen, welche die Haftung bei einer Verklebung oder für einen Putzauftrag positiv beeinflusst. Darüber hinaus lassen sich derartige Rillen wiederum problemlos im Zuge des Strangpressvorganges ausgestalten, so dass dies mit geringem Fertigungsaufwand möglich ist.

Ferner ist wenigstens eine Aufnahme so ausgebildet ist, dass sie einen Formschluss mit einer Halteeinrichtung herstellt. Damit ist es auf einfache Weise möglich, den erfindungsgemäßen Dämmziegel in eine entsprechende Halteeinrichtung am tragenden Wandelement ein- bzw. anzuhängen. Hierdurch lässt sich die Montage einer aus erfindungsgemäßen Dämmziegeln gebildeten Ziegelwandschicht für Dämmzwecke besonders einfach gestalten. Darüber hinaus lässt sich diese mit besonders geringem Aufwand beim Strangpressen mit anformen. Ferner erlaubt das Strangpressen der Dämmziegel eine sehr exakte Ausgestaltung der wenigstens einen Aufnahme mit geringen Fertigungstoleranzen, so dass sich hierdurch eine gleichmäßige Ziegelwandschicht an der Außenseite eines tragenden Wandelements ausgestalten lässt. Damit ist eine hinreichende Ebenheit für den Auftrag beispielsweise einer Putzlage erzielbar. Bevorzugt ist die wenigstens eine Aufnahme im Querschnitt hakenförmig ausgebildet, wodurch sich diese auf einfache Weise und mit geringem Montageaufwand in eine entsprechende Halteeinrichtung am tragenden Wandelement einhängen lässt.

Indem die wenigstens eine Aufnahme im Querschnitt in einem Eckbereich zwischen einem Außenquersteg und einem Längsquersteg ausgebildet ist, ergibt sich ein besonders stabiler Sitz für den erfindungsgemäßen Dämmziegel an einem tragenden Wandelement. Allein schwerkraftbedingt bietet es sich dann an, die Halteeinrichtung an der Oberseite des Dämmziegels im Einbauzustand in dem Eckbereich vorzusehen, der dem tragenden Wandelement zugewandt ist. Der Dämmziegel legt sich dann im unteren Bereich automatisch dicht an das tragende Wandelement an. Hierdurch ergibt sich somit eine besonders günstige und zuverlässige Positionierbarkeit des Dämmziegels an einem tragenden Wandelement.

Vorteilhafte Weiterbildungen des erfindungsgemäßen Dämmziegels sind Gegenstand der abhängigen Ansprüche 2 bis 7.

So ist es von weiterem Vorteil, wenn eine Öffnung der wenigstens einen Aufnahme im Bereich eines Außenlängsstegs angeordnet ist. Dies ermöglicht ein Untergreifen der wenigstens einen Aufnahme durch eine Halteeinrichtung am tragenden Wandelement, wodurch sich ein noch zuverlässigerer Halt des Dämmziegels am tragenden Wandelement erreichen lässt. Zugleich ist es nicht erforderlich, den Dämmziegel bzw. das Dämmmaterial für die Herstellung der Verbindung zwischen dem Dämmziegel und einem tragenden Wandelement mit einer Bohrung etc. zu durchstoßen, wodurch Wärmebrücken innerhalb der aus den Dämmziegeln ausgebildeten Ziegelwandschicht besonders gut vermieden werden.

Darüber hinaus kann der Dämmziegel im Bereich der wenigstens einen Aufnahme einen Verstrebungssteg aufweisen. Hierdurch wird der Dämmziegel zusätzlich versteift, so dass sich dessen Festigkeit insbesondere gegen die hier auftretenden Scherkräfte erhöht. Dies verstärkt den integralen Zusammenhalt innerhalb des Dämmziegels gerade auch in dem Bereich, an dem die Haltekräfte abgefangen werden. Damit erhöht sich die Lebensdauer und Zuverlässigkeit der erfindungsgemäßen Dämmziegel.

Wenn wenigstens einer der Außenlängsstege doppelwandig mit einer Lochung ausgebildet ist, ist es hier besonders gut möglich, Lampen, Lichtschalter, oder dgl. am Dämmziegel zu befestigen. Hierfür gesetzte Dübel finden in diesem Doppelsteg einen hinreichenden Halt. Im Einbauzustand des Dämmziegels wird bevorzugt an der im fertigen Mauerwerk außenseitig vorliegenden Fassadenfläche ein doppelwandiger Außenlängssteg vorgesehen.

Darüber hinaus ist es auch möglich, dass außenseitig an wenigstens einem der Außenlängsstege zumindest ein Fugenleitprofil ausgebildet ist, welches sich parallel zum Verfüllkanal erstreckt. Dieses Fugenleitprofil kann als Anschlag für Riemchen aus Klinker, Fliesen oder dergleichen sehr vorteilhaft genutzt werden, so dass hier mit besonders geringem Aufwand eine außenseitige Verkleidung einer aus den erfindungsgemäßen Dämmziegeln gebildeten Ziegelwandschicht möglich ist. Der Verarbeitungsaufwand reduziert sich hier ganz wesentlich. Vom weiteren Vorteil ist hierbei, dass derartige Fugenleitprofile an dem erfindungsgemäß als Langlochziegel ausgebildeten Dämmziegel problemlos im Zuge des Strangpressens angeformt werden können. Hierzu ist lediglich die Wahl einer geeigneten Matrizengestalt erforderlich. Zudem ist die Ausbildung derartiger Fugenleitprofile durch den Strangpressvorgang mit sehr geringen Fertigungstoleranzen möglich.

Der erfindungsgemäße Dämmziegel lässt sich dabei sehr großformatig bereitstellen. Aufgrund des hohen Anteils an Dämmfüllung hat er zudem ein geringes Gewicht. Im Hinblick auf die Länge gibt es durch den Strangpressvorgang für die Herstellung im Prinzip kaum eine Beschränkung. Aus verarbeitungstechnischen Gründen erscheint hier ein Maß für die Länge zwischen ca. 25 cm und ca. 300 cm als günstig, wobei sich die Handhabung besonders gut gestaltet, wenn die Länge zwischen ca. 50 cm und ca. 100 cm liegt, da weiterhin relativ wenige Dämmziegel zur Ausbildung einer Ziegelwandschicht erforderlich sind und diese dennoch von einer Größe sind, welche sich gut verarbeiten lässt. Auch in der Höhe lässt der erfindungsgemäße Dämmziegel eine große Bandbreite zu, welche bevorzugt in einem Bereich zwischen ca. 12,5 cm und 100 cm liegt. Dies ist durch die Wahl einer entsprechenden Matrize ohne weiteres möglich. Insbesondere kann die Höhe aus verarbeitungstechnischen Gründen in einem Bereich zwischen ca. 25 cm und ca. 50 cm gewählt werden. Die Breite des erfindungsgemäßen Dämmziegels liegt bevorzugt zwischen ca. 12 cm und ca. 50 cm und gibt letztendlich die Dämmdicke an. Für die herkömmlichen Anforderungen ist dabei insbesondere eine Breite zwischen ca. 20 cm und ca. 30 cm zumeist ausreichend und geeignet, um den Dämmziegel gut handhaben zu können.

Dabei kann das Dämmmaterial organischer oder mineralischer Natur sein und insbesondere aus geschäumten PUR, geschäumten EPS, Mineralwolle, Perlit oder dgl. bestehen. Durch diese Materialien lassen sich sehr gute Dämmeigenschaften bereitstellen und beispielsweise bei Verwendung von Mineralwolle der Brandschutz weiter verbessern.

Gemäß einem weiteren Aspekt der vorliegenden Erfindung wird nach Anspruch 8 eine mehrschichtige Wand bereitgestellt. Diese besteht aus einem tragenden Wandelement sowie mindestens einer zusätzlichen Ziegelwandschicht für Dämmzwecke, welche innen- und/oder außenseitig am tragenden Wandelement angeordnet und dort befestigt ist, wobei die Ziegelwandschicht aus einer Mehrzahl von Dämmziegeln ausgebildet ist. Diese mehrschichtige Wand zeichnet sich dabei insbesondere dadurch aus, dass die Dämmziegel in der erfindungsgemäßen Weise ausgebildet sind, und dass die Dämmziegel einzeln mittels Halteeinrichtungen derart nebeneinander in Zeilen an dem tragenden Wandelement angehängt sind, dass deren Verfüllkanäle im Wesentlichen zueinander fluchten, wobei mehrere Zeilen an Dämmziegeln übereinander vorliegen und so die Ziegelwandschicht bilden.

Die so ausgebildete mehrschichtige Wand zeichnet sich dabei durch besonders gute Brandschutzeigenschaften aus, da die Brandlast - wie oben bereits dargelegt wurde - zeilenmäßig abgeschottet ist und somit keine Kaminwirkung auftritt.

Hierzu trägt auch bei, dass das Dämmmaterial im erfindungsgemäßen Dämmziegel umfangsseitig durch die Außenlängs- und Außenquerstege gekapselt ist und im montierten Zustand am tragenden Wandelement zusätzlich auch die offenen Enden nicht frei zur Umgebung vorliegen. Damit wird ein Sauerstoffzutritt vermeiden und eine Brandentwicklung gebremst.

Damit erweitert sich ferner das Feld der einsetzbaren Dämmstoffe. Erfindungsgemäß ist es daher in vielen Einsatzfällen erstmals möglich, trotz deren Entflammbarkeit organische Dämmstoffe wie geschäumte Kunststoffe als Dämmmaterial einzusetzen und deren besonders gute Dämmeigenschaften zu nutzen.

Aber auch unabhängig von der Art des verwendeten Dämmstoffs kombiniert die erfindungsgemäße mehrschichtige Wand somit sehr gute Dämmeigenschaften mit verbesserten Brandschutzeigenschaften. Sie ist zudem kostengünstig erstellbar.

Überdies zeichnet sich die erfindungsgemäße mehrschichtige Wand auch durch eine verbesserte Schallschutzwirkung aus. So ist der Schalldurchgang in vertikaler Richtung an der Wand gedämpft, da die Dämmziegel zeilenweise an der mehrschichtigen Wand vorliegen.

Ein weiterer Vorteil der hängenden Befestigung der Dämmziegel an einem tragenden Wandelement liegt darin, dass übereinander vorliegende Dämmziegel zwar passgenau an ihren Lagerfugenflächen übereinander zu liegen kommen können, dabei jedoch kein Mörtelband zu deren Verbindung erforderlich ist. Auch hierdurch lässt sich der Verarbeitungsaufwand zur Herstellung des mehrschichtigen Mauerwerks besonders gering halten. Zugleich lässt sich hier eine Wärmebrücke durch ein solches Mörtelband vermeiden.

Da die Dämmlage außenseitigen nicht frei vorliegt, sondern hier jeweils ein Steg des erfindungsgemäßen Dämmziegels angeordnet ist, hat diese mehrschichtige Wand zudem eine gute mechanische Festigkeit gegenüber Schlag- und Stoßbelastungen und bietet ferner einen guten Untergrund für eine Putzlage oder dgl. an.

Vorteilhafte Weiterbildungen der erfindungsgemäßen mehrschichtigen Wand sind Gegenstand der abhängigen Ansprüche 9 und 10.

So können die Halteeinrichtungen als Profilschienen zur Herstellung eines Formschlusses mit den Dämmziegeln ausgestaltet sein, wobei sie horizontal verlaufend an dem tragenden Wandelement befestigt sind. Dann lassen sich die Halteeinrichtungen mit sehr geringem Aufwand bereitstellen und können zudem eine maßgenaue Basis für das Ein- bzw. Anhängen der erfindungsgemäßen Dämmziegel bilden. Der Montagevorgang vereinfacht sich dadurch weiter. Vorzugweise sind die Halteeinrichtungen als hakenförmige Profilschienen, insbesondere Metallprofilschienen, ausgebildet, wodurch mit einfachen konstruktiven Mitteln eine zuverlässige Befestigung der Dämmziegel möglich ist.

Wenn die Dämmziegel zusätzlich mit einem Haftmittel an dem tragenden Wandelement befestigt sind, wird eine Beeinträchtigung der zusätzlichen Ziegelwandschicht durch Windsog oder dergleichen besonders zuverlässig vermieden. Insbesondere wird damit erreicht, dass die Dämmziegel dann nach dem Einhängen nicht mehr von dem tragenden Wandelement weg verschwenken, das heißt stabil an ihrer Position verbleiben. Damit ist auch eine eventuelle Beschädigung einer Putzlage gegebenenfalls besonders gut unterbunden.

Gemäß noch einem weiteren Aspekt der vorliegenden Erfindung wird nach Anspruch 11 ein Gebäude mit mehreren Wänden und einem Dach bereitgestellt, welches sich dadurch auszeichnet, dass wenigstens eine Wand als eine erfindungsgemäße mehrschichtige Wand ausgebildet ist. Ein derart ausgestaltetes Gebäude zeichnet sich durch besonders gute Brandschutz- und Wärmedämmeigenschaften aus und erhält zudem eine robuste Außenschale, welche unempfindlich gegenüber mechanischen Einflüssen ist. Zugleich lässt sich dieses Gebäude mit geringem Herstellungsaufwand erstellen oder ein bestehendes Gebäude gleichermaßen mit geringem Verarbeitungsaufwand erfindungsgemäß nachrüsten und so energetisch sanieren.

Gemäß noch einem weiteren Aspekt der vorliegenden Erfindung wird nach Anspruch 12 ein Verfahren zum Erstellen einer mehrschichtigen Wand bereitgestellt, mit den Schritten: Bereitstellen eines tragenden Wandelements, Befestigen von Halteeinrichtungen an dem tragenden Wandelement, und Anhängen einer Mehrzahl von erfindungsgemäßen Dämmziegeln in eine zugeordnete Halteeinrichtung derart nebeneinander in Zeilen, dass deren Verfüllkanäle im Wesentlichen zueinander fluchten, wobei mehrere Zeilen an Dämmziegeln übereinander angeordnet werden und so eine Ziegelwandschicht bilden.
Durch dieses Verfahren lässt sich die erfindungsgemäße mehrschichtige Wand mit besonders geringem Aufwand herstellen. Weitere Vorteile hierzu ergeben sich aus den obigen Darlegungen zu den nebengeordneten Ansprüchen.

Vorteilhafte Weiterbildungen des erfindungsgemäßen Verfahrens sind Gegenstand der abhängigen Ansprüche 13 und 14. Die sich hieraus ergebenden vorteilhaften Effekte sind dabei ebenfalls bereits oben anhand der Ausführungen zur mehrschichtigen Wand dargelegt.

Die Erfindung wird nachfolgend in Ausführungsbeispielen anhand der Figuren der Zeichnung näher erläutert. Es zeigt:
- Fig. 1: eine perspektivische Ansicht eines erfindungsgemäßen Dämmziegels;
- Fig. 2: eine schematische perspektivische Darstellung einer mehrschichtigen Wand gemäß der vorliegenden Erfindung;
- Fig. 3: eine Schnittansicht der erfindungsgemäßen mehrschichtigen Wand; und
- Fig. 4: eine Schnittansicht einer erfindungsgemäßen mehrschichtigen Wand gemäß einer weiteren Ausführungsform.

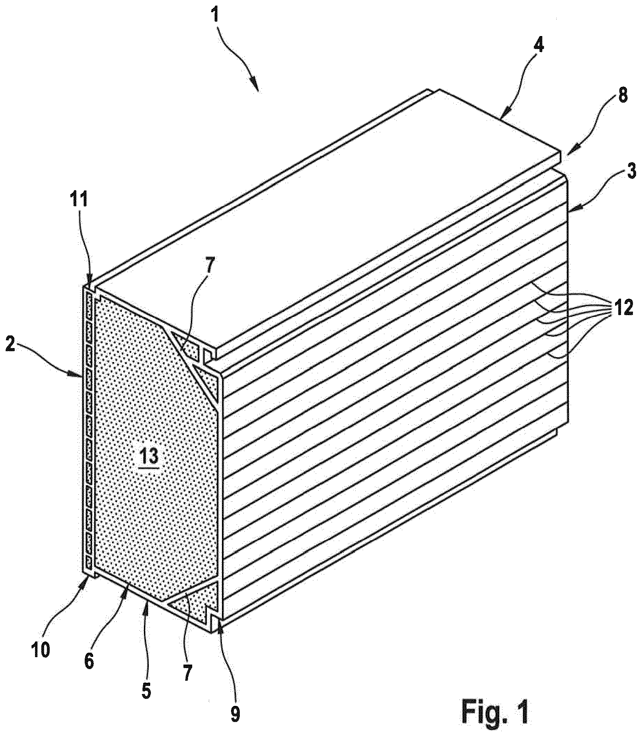

Gemäß der Darstellung in Fig. 1 ist ein Dämmziegel 1 als Langlochziegel mit einer Dämmfüllung ausgebildet. Er weist einen ersten Außenlängssteg 2 auf, welcher hier doppelwandig mit einer Lochung ausgestaltet ist. Ferner weist er einen zweiten Außenlängssteg 3 auf, welcher im Wesentlichen parallel zum ersten Außenlängssteg 2 angeordnet ist. Der Dämmziegel 1 enthält zudem einen ersten Außenquersteg 4 und einen zweiten Außenquersteg 5, welche ebenfalls im Wesentlichen parallel zueinander angeordnet sind und zusammen mit den Außenlängsstegen 2 und 3 die im Wesentlichen quaderförmige Gestalt des Dämmziegels 1 formen.

Zudem bilden diese Stege einen großformatigen Verfüllkanal 6 im Inneren des Dämmziegels 1, der im gezeigten Beispiel noch durch zwei Verstrebungsstege 7 unterbrochen ist. Die Außenquerstege 4 und 5 bilden die Lagerfugenflächen des Dämmziegels 1, zu denen sich der Verfüllkanal 6 im Wesentlichen parallel erstreckt.

Der Dämmziegel 1 weist ferner eine Aufnahme 8 auf, welche hier im Querschnitt hakenförmig ausgebildet ist. Sie liegt, im Querschnitt betrachtet, in einem Eckbereich zwischen dem Außenquersteg 4 und den zweiten Außenlängssteg 3 vor. Die Aufnahme 8 bildet hier somit einen Kantenabschnitt des Dämmziegels 1 und ist so angeordnet, dass sie im montierten Zustand des Dämmziegels 1 an einer tragenden Wand in einer später noch in näherem Detail erläuterten Weise der Wand zugewandt ist und im oberen Bereich der Anlagefläche des Dämmziegels 1 an der Wand vorliegt. Die Aufnahme 8 ist konstruktiv so ausgelegt, dass sie die Eigenlast des Dämmziegels 1, die Lasten von ggf. außenseitig aufgebrachten Putzlagen, Riemchen etc. und auch die Windsoglasten etc. aufnehmen kann.

Der Dämmziegel 1 weist ferner eine Aussparung 9 in Kantenbereich zwischen dem Außenlängssteg 3 und dem Außenquersteg 5 auf.

Im Kantenbereich zwischen dem ersten Außenlängssteg 2 und dem Außenquersteg 5 weist der Dämmziegel 1 ferner einen Vorsprung 10 auf. Komplementär hierzu enthält der Dämmziegel 1 im Kantenbereich des ersten Außenlängsstegs 2 zum Außenquersteg 4 eine Stufe 11, wobei der Vorsprung 10 und die Stufe 11 bei geeignet übereinander angeordneten Dämmziegeln 1 passend ineinandergreifen.

An der äußeren Oberfläche des zweiten Außenlängsstegs 3 ist ferner eine Mehrzahl von Rillen 12 angeformt, welche hier nur schematisch angedeutet sind und in der Praxis eine sägezahnartige, rechteckige oder abgerundete Querschnittsform aufweisen.

Innerhalb des Verfüllkanals 6 ist ferner ein Dämmkern 13 aus einem geschäumten Kunststoff angeordnet, da hierdurch besonders gute Wärmedämmeigenschaften erzielt werden. Als Material wird hier speziell geschäumtes Polystyrol (EPS) verwendet. Dieser Dämmkern 13 liegt auch in den von den Verstrebungsstegen 7 separierten Hohlräumen sowie der Lochung im ersten Außenlängssteg 2 vor.

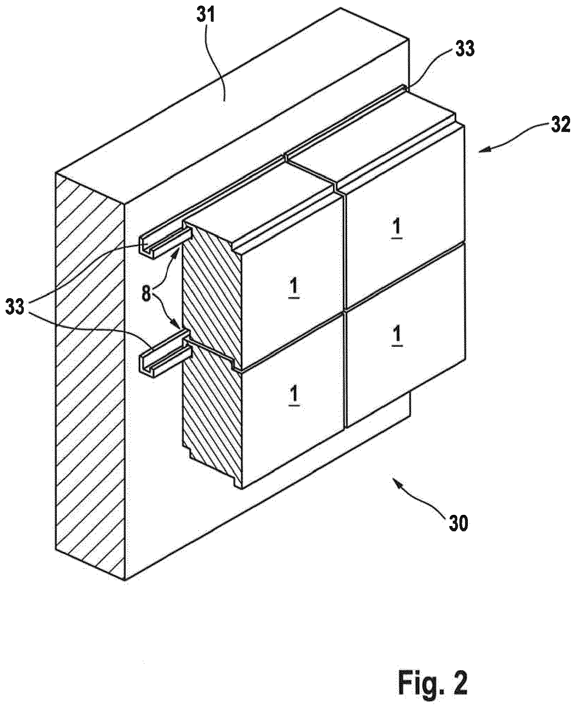

In Figur 2 ist schematisch in perspektivischer Ansicht eine mehrschichtige Wand 30 gezeigt. Diese weist ein tragendes Wandelement 31 auf, an welches eine Ziegelwandschicht 32 angehängt ist.

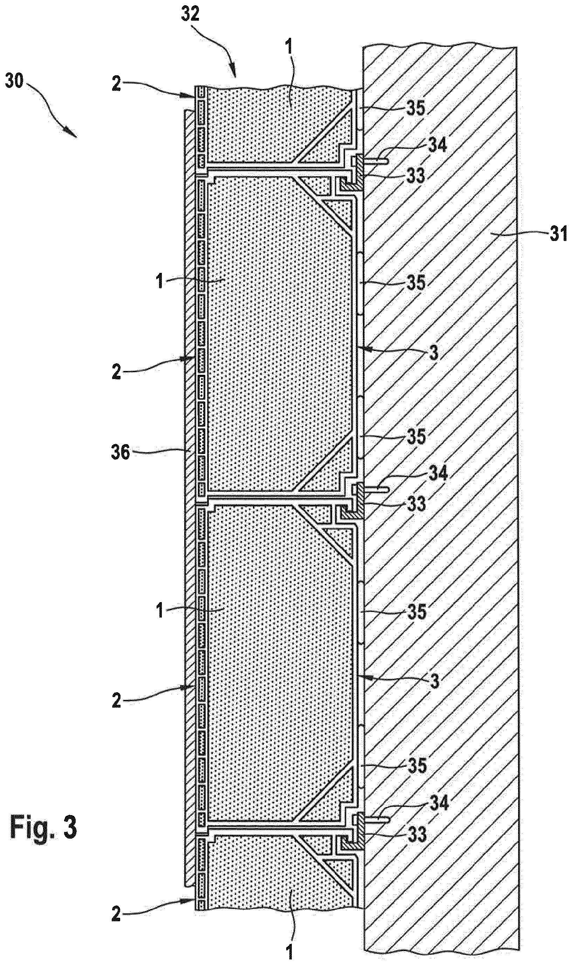

Die Ziegelwandschicht 32 ist aus einer Mehrzahl von Dämmziegeln 1 gebildet, von denen hier beispielhaft vier gezeigt sind, wobei die beiden Dämmziegel 1 im Vordergrund zur Veranschaulichung im Schnitt dargestellt sind. Hieraus ist ersichtlich, dass die Dämmziegel 1 in Metallprofilschienen 33 eingehängt sind und mittels diesen an dem tragenden Wandelement 31 befestigt sind. Wie in näherem Detail aus Figur 3 erkennbar ist, sind die Metallprofilschienen 33 mittels Verschraubungen 34 am tragenden Wandelement 31 festgelegt. Sie weisen eine hakenförmige Gestalt auf, welche Komplementär zur hakenförmigen Aufnahme 8 am Dämmziegel 1 ausgestaltet ist. Diese formschlüssige Verbindung kann zusätzlich durch eine kraftschlüssige und/oder eine stoffschlüssige Verbindung unterstützt sein, wie z.B. durch einen Auftrag von Mörtel, PU-Schaum etc. an der Einhängestelle.

Durch die Verschraubung der Metallprofilschienen 33 am tragenden Wandelement 31 wird eine Gründung in der Tiefe des Mauerwerks vorgenommen und der Zustand einer Putzlage etc. an der Außenfläche der tragenden Wand ist letztendlich unerheblich, d.h., es kommt hier nicht auf die Tragfähigkeit der äußeren Wandschicht an. Damit reduziert sich der Vorbereitungsaufwand bei einer Altbausanierung erheblich, da der Untergrund somit nicht diesbezüglich geprüft bzw. ggf. nachbearbeitet werden muss.

Wie aus dem Schnitt in Figur 3 ferner erkennbar ist, ist zwischen dem zweiten Außenlängssteg 3 und der dem Dämmziegel 1 zugewandten Außenfläche des tragenden Wandelements 31 ferner an mehreren Stellen ein Kleber 35 als Haftmittel angeordnet. Als Kleber ist im gezeigten Beispiel ein Fliesenkleber eingesetzt.

Auf der dem tragenden Wandelement 31 abgewandten Großfläche der Ziegelwandschicht 32 ist zudem eine herkömmliche Putzlage 36 angeordnet, wie ebenfalls in Figur 3 ersichtlich ist.

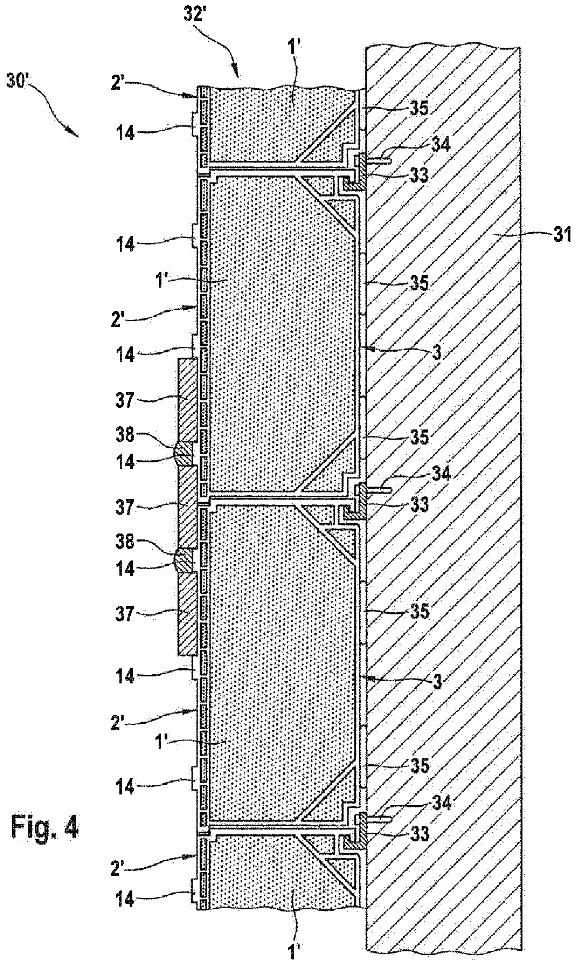

Figur 4 zeigt eine abgewandelte Ausgestaltungsweise der Erfindung, bei der Fugenleitprofile 14 an einem ersten Außenlängssteg 2' des hier gezeigten Dämmziegels 1' ausgebildet sind. Die Fugenleitprofile 14 erstrecken sich parallel zum Verfüllkanal 6 und dienen als Positionierungshilfe für Riemchen 37, welche anstelle einer Putzlage in dieser Ausführungsform als keramische Bekleidung in Gestalt von Klinker an einer damit gebildeten mehrschichtigen Wand 30' eingesetzt werden. Die Riemchen 37, von denen hier beispielhaft nur drei gezeigt sind, liegen damit Reihe für Reihe in gleich bleibenden Abständen zueinander vor. Die durch die Fugenleitprofile 14 vorgegebenen Abstände zwischen den Riemchen 37 sind schließlich mit Mörtelbändern 38 verfügt.

Hiervon abgesehen entspricht die Ausführungsform in Figur 4 jener in Figur 3.

Zur Herstellung einer mehrschichtigen Wand 30 bzw. 30' wird zunächst geprüft, ob das tragende Wandelement 31 hinreichende statische Eigenschaften zur Aufnahme der Last der Ziegelwandschicht 32 bzw. 32' aufweist. Dann werden entsprechend der Höhe der Dämmziegel 1 bzw. 1' in dem so vorgegebenen Abstand die Metallprofilschienen 33 an das tragenden Wandelement 31 angedübelt. Anschließend werden die Dämmziegel 1 bzw. 1' einzeln nacheinander von unten nach oben in die Metallprofilschienen 33 eingehängt. Die hakenförmige Aufnahme 8 und die hakenförmige Metallprofilschiene 33 bilden dabei einen Formschluss. Dabei wird der Dämmziegel 1 bzw. 1' mit den zuvor auf den zweiten Außenlängssteg 3 aufgebrachten Kleber 35 gegen das tragende Wandelement 31 gedrückt und erreicht so seine Endposition, wobei der Vorsprung 10 in der Stufe 11 des darunter vorliegenden Dämmziegels 1 auf Anschlag gelangt.

Wenn eine Zeile an Dämmziegeln 1 bzw. 1' an der entsprechenden Metallprofilschiene 33 eingehängt ist, wird die darüber vorliegende Zeile an Dämmziegeln begonnen. Auch hier wird ein Dämmziegel 1 bzw. 1' nach dem anderen nebeneinander in entsprechende Metallprofilschienen 33 eingehängt. Die Aussparung 9 am unteren Ende des Dämmziegel 1 bzw. 1' ist dabei geeignet, um den Schraubenkopf der Verschraubung 34 der Metallprofilschienen 33 aufzunehmen, so dass es hier zu keiner Beeinträchtigung kommt. Zudem gelang wiederum gleichzeitig der Vorsprung 10 an einem Dämmziegel 1 bzw. 1' in Eingriff mit der Stufe 11 am darunter angeordneten Dämmziegel.

Auf diese Weise lässt sich Zeile für Zeile die Ziegelwandschicht 32 bzw. 32' ausbilden. Auf diese kann dann die Putzlage 36 aufgebracht werden, oder es werden die Riemchen 37 angesetzt.

Sofern hier Aussparungen in der mehrschichtigen Wand 30 bzw. 30' zum Beispiel für Fenster, Türen oder dergleichen erforderlich sind, ist es dabei problemlos möglich, die einzelnen Dämmziegel 1 bzw. 1' entsprechend zuzuschneiden. Da der Dämmkern 13 hier im Dämmziegelkörper eingeschäumt ist, und als ein Körper hierin vorliegt, besteht keine Gefahr, dass dieser aus dem Dämmziegel herausfallen würde.

Die Erfindung lässt neben den gezeigten Ausführungsformen weitere Ausgestaltungsansätze zu.

So kann die Aufnahme auch in anderer Gestalt als hakenförmig ausgebildet sein. Insbesondere wenn zusätzlich eine Verklebung am tragenden Wandelement vorgesehen ist, kann es zum Beispiel ausreichen, wenn die Aufnahme als Auflager ausgestaltet ist und einen Kraft- oder Stoffschluss bereitstellt. Auch andere Geometrien sind möglich, solange ein Zusammenwirken mit der Halteeinrichtung z.B. durch eine Klemmwirkung etc., gegeben ist. Wesentlich hierbei ist lediglich, dass die Dämmziegel sich nicht selbst tragen, sondern über die Halteeinrichtungen vom tragenden Wandelement 31 gehalten werden.

Auch die Halteeinrichtung kann dementsprechend angepasst sein und eine andere Querschnittgestalt annehmen. Überdies kann sie aus einem anderen Werkstoff als Metall wie z.B. aus Stein etc. sowie auch einstückig mit dem tragenden Wandelement 31 ausgebildet sein.

Zudem ist es beispielsweise auch möglich, die Halteeinrichtung mit zwei Hakenelementen zu versehen, so dass ein Haken am oberen Ende des unteren Dämmziegels einhakt, während ein weiterer Haken im Bereich der Aussparung 9 am oberen Dämmziegel in einer geeignet ausgestalteten Kontur hakend eingreift. Hierfür wäre dann die Aussparung 9 entsprechend anzupassen. Diese Ausgestaltungsweise hätte den weiteren Vorteil, dass jeder Dämmziegel 1 bzw. 1' dann sowohl am oberen als auch am unteren Ende des zweiten Außenlängsstegs 3 festgelegt wäre. Dann könnte auch ohne weiteres auf den Kleber 35 verzichtet werden.

Es kann auch mehr als eine Aufnahme 8 an den Dämmziegel 1 bzw. 1' angeformt sein, um einen besonders stabilen Halt des Dämmziegels an dem tragenden Wandelement 31 zu ermöglichen.

Ferner ist es auch möglich, dass die Aufnahme nicht in einem Eckbereich zwischen Außenlängssteg und Außenquersteg angeordnet ist, sondern in einem Zentralbereich eines Außenlängsstegs, so dass jeder Dämmziegel in einem Mittelbereich, bevorzugt etwas oberhalb hiervon, am tragenden Wandelement 31 gehalten ist.

Die Aufnahme am Dämmziegel 1 bzw. 1' könnte ferner auch so ausgestaltet sein, dass deren Öffnung nicht über den Außenlängssteg, sondern von einem Außenquersteg her zugänglich ist. Auch hierdurch lässt sich ein Verhaken mit einer entsprechend angepassten Metallprofilschiene ohne weiteres herstellen. Der Dämmziegel 1 bzw. 1' würde dann nicht von oben her eingehängt, sondern z.B. von unten her eingeschwenkt.

In den beiden in den Figuren gezeigten Ausführungsformen weisen die Dämmziegel 1 bzw. 1' jeweils zwei Verstrebungsstege 7 auf. Diese sind jedoch nicht für alle Anwendungsbeispiele erforderlich. Häufig ist es ausreichend, alleine im Bereich der Aufnahme 8 einen Verstrebungssteg vorzusehen. Alternativ ist es jedoch auch möglich, den Verfüllkanal 6 durch weitere Verstrebungsstege, Querstege, Längsstege etc. in weitere Einzelkammern zu unterteilen. Dies ist insbesondere bei besonders großformatigen Dämmziegeln vorteilhaft, um deren statische Belastbarkeit zu verbessern.

Der Außenlängssteg 2 bzw. 2' muss ferner nicht doppelwandig mit einer Lochung ausgebildet sein. In einer vereinfachten Ausführungsform reicht hier ein einzelner Steg. Darüber hinaus kann die Lochung im gezeigten doppelwandigen Außenlängssteg mit Dämmmaterial verfüllt sein oder auch frei hiervon sein. Ferner ist es auch möglich, den zweiten Außenlängssteg 3 doppelwandig oder einwandig auszugestalten.

In vereinfachten Ausführungsformen kann ferner auch auf den Vorsprung 10 bzw. die komplementäre Stufe 11 verzichtet werden. Sofern der Platz für die Verschraubung 34 der Metallprofilschiene 33 hinreichend ist, kann eventuell auch auf die Aussparung 9 verzichtet werden.

Insbesondere ist es auch möglich, anstelle einer durchlaufenden Schiene für jeden einzelnen Dämmziegel einzelne Haken einzusetzen, welche eine punktuelle Verbindung herstellen. Andererseits ist es auch möglich, eine lange, durchlaufende Metallprofilschiene einzusetzen, an welche mehrere Dämmziegel 1 bzw. 1' einhängbar sind.

Auf die Mehrzahl von Rillen am zweiten Außenlängssteg 3 kann zudem verzichtet werden. Andererseits ist es jedoch auch möglich und beim Einsatz einer Putzlage 36 vorteilhaft, wenn auch auf der Außenseite des ersten Außenlängsstegs 2 bzw. 2' Rillen vorgesehen sind.

Als Dämmmaterial kann anstelle von geschäumten EPS auch ein anderer geschäumter Kunststoff oder ein mineralischer Dämmwerkstoff eingesetzt werden.

In einer abgewandelten Ausführungsform ist es ferner möglich, dass an den offenen Enden des Ziegelkörpers in dem dort frei vorliegenden Dämmmaterial eine Stoßfugenverzahnung angeformt ist. Dann ergibt sich hier ein Formschluss von zwei benachbarten Dämmziegeln, durch den eine Wärmebrücke an dieser Stoßstelle noch zuverlässiger vermieden wird. Eine solche Stoßfugenverzahnung lässt sich bei der Herstellung der Dämmziegel werksseitig mit relativ geringem Aufwand im Zuge des Aufschäumvorgangs ausbilden.

Als Kleber 35 kann ferner auch ein geeigneter Mörtel, z.B. Dünnbettmörtel, ein PUR-Schaum oder anderes geeignetes und im Baubereich bewährtes Haftmittel eingesetzt werden.

In der in Figur 4 gezeigten Ausführungsform sind Riemchen 37 gezeigt, welche als Fassadenverkleidung dienen. Anstelle derartiger Riemchen können jedoch auch Fliesen oder dergleichen verwendet werden.

Auf der der Ziegelwandschicht 32 bzw. 32' zugewandten Fläche des tragenden Wandelements 31 kann ferner auch eine Ausgleichsschicht aufgebracht sein, um eventuelle Unebenheiten oder dergleichen zu beseitigen. Da die Ziegelwandschicht 32 bzw. 32' in den gezeigten Ausführungsbeispielen nicht direkt an dem tragenden Wandelement 31 zu liegen kommt, reicht es hier letztendlich jedoch aus, wenn der Auflagebereich der Metallprofilschienen 33 mit einer Ausgleichsschicht versehen wird, um hier eine gleichmäßige und ebene äußere Fläche der mehrschichtigen Wand 30 bzw. 30' zu erzielen.

In den erläuterten Ausführungsbeispielen ist die Ziegelwandschicht 32 bzw. 32' außenseitig als Fassadenverkleidung an dem tragenden Wandelement 31 angebracht; alternativ oder ergänzend hierzu ist es jedoch auch möglich, eine entsprechende Ziegelwandschicht innenseitig anzuordnen. Dabei werden im Prinzip die gleichen Vorteile hinsichtlich des wirksameren Brandschutzes wie auch der verbesserten Wärmedämmeigenschaften erreicht.

## Patentansprüche

1. Dämmziegel (1; 1') für eine mehrschichtige Wand (30; 30'), welcher als Langlochziegel ausgebildet ist, mit zwei Außenlängsstegen (2, 3; 2') und zwei Außenquerstegen (4, 5), welche Lagerfugenflächen bilden, wenigstens einem sich parallel zu den Lagerfugenflächen erstreckenden Verfüllkanal (6) sowie mit wenigstens einer Aufnahme (8) für eine Halteeinrichtung, welche an den Dämmziegel (1; 1') angeformt ist, **dadurch gekennzeichnet,**
**dass** der Verfüllkanal (6) mit einem Dämmmaterial ausgefüllt ist,
**dass** außenseitig an dem Außenlängssteg (3) mit der Aufnahme (8) eine Mehrzahl von Rillen (12) ausgebildet ist, welche sich parallel zum Verfüllkanal (6) erstrecken, und
**dass** die wenigstens eine Aufnahme (8) im Querschnitt hakenförmig ausgebildet ist, so dass die Aufnahme (8) einen Formschluss mit der Halteeinrichtung herstellt.

2. Dämmziegel nach Anspruch 1, **dadurch gekennzeichnet, dass** eine Öffnung der wenigstens einen Aufnahme (8) im Bereich eines Außenlängsstegs (3) angeordnet ist.

3. Dämmziegel nach Anspruch 1 oder 2, **dadurch gekennzeichnet, dass** er im Bereich der wenigstens einen Aufnahme (8) einen Verstrebungssteg (7) aufweist.

4. Dämmziegel nach einem der Ansprüche 1 bis 3, **dadurch gekennzeichnet, dass** wenigstens einer der Außenlängsstege (2, 3; 2') doppelwandig mit einer Lochung ausgebildet ist.

5. Dämmziegel nach einem der Ansprüche 1 bis 4, **dadurch gekennzeichnet, dass** außenseitig an wenigstens einem der Außenlängsstege (2') zumindest ein Fugenleitprofil (14) ausgebildet ist, welches sich parallel zum Verfüllkanal (6) erstreckt.

6. Dämmziegel nach einem der Ansprüche 1 bis 5, **dadurch gekennzeichnet, dass** er eine Länge zwischen ca. 25 cm und 300 cm, insbesondere zwischen ca. 50 cm und 100 cm, eine Höhe zwischen ca. 12,5 cm und 100 cm, insbesondere zwischen ca. 25 cm und 50 cm, sowie eine Breite zwischen ca. 12 cm und 50 cm, insbesondere zwischen ca. 20 cm und 30 cm, aufweist.

7. Dämmziegel nach einem der Ansprüche 1 bis 6, **dadurch gekennzeichnet, dass** das Dämmmaterial organischer oder mineralischer Natur ist und insbesondere aus geschäumten PUR, geschäumten EPS, Mineralwolle, Perlit oder dgl. besteht.

8. Mehrschichtige Wand (30; 30') aus einem tragenden Wandelement (31) sowie mindestens einer zusätzlichen Ziegelwandschicht (32; 32') für Dämmzwecke, welche innen- und/oder außenseitig am tragenden Wandelement (31) angeordnet und dort befestigt ist, wobei die Ziegelwandschicht (32; 32') aus einer Mehrzahl von Dämmziegeln (1; 1') ausgebildet ist,
**dadurch gekennzeichnet, dass** die Dämmziegel (1; 1') nach einem der Ansprüche 1 bis 7 ausgebildet sind, und
dass die Dämmziegel (1; 1') einzeln mittels Halteeinrichtungen derart nebeneinander in Zeilen an dem tragenden Wandelement (31) angehängt sind, dass deren Verfüllkanäle (6) im Wesentlichen zueinander fluchten, wobei mehrere Zeilen an Dämmziegeln (1; 1') übereinander vorliegen und so die Ziegelwandschicht (32; 32') bilden, wobei der Außenlängssteg (3) mit den Rillen (12) dem tragenden Wandelement (31) zugewandt ist.

9. Mehrschichtige Wand nach Anspruch 8, **dadurch gekennzeichnet, dass** die Halteeinrichtungen als Profilschienen zur Herstellung eines Formschlusses mit den Dämmziegeln ausgestaltet sind, wobei sie horizontal verlaufend an dem tragenden Wandelement (31) befestigt sind, und wobei sie vorzugsweise als hakenförmige Profilschienen, insbesondere Metallprofilschienen (33), ausgebildet sind.

10. Mehrschichtige Wand nach Anspruch 8 oder 9, **dadurch gekennzeichnet, dass** die Dämmziegel (1; 1') zusätzlich mit einem Haftmittel an dem tragenden Wandelement (31) befestigt sind.

11. Gebäude mit mehreren Wänden und einem Dach, **dadurch gekennzeichnet, dass** wenigstens eine Wand als mehrschichtige Wand (30; 30') nach einem der Ansprüche 8 bis 10 ausgebildet ist.

12. Verfahren zum Erstellen einer mehrschichtigen Wand (30; 30'), mit den Schritten:
Bereitstellen eines tragenden Wandelements (31),
Befestigen von Halteeinrichtungen an dem tragenden Wandelement (31), und
Anhängen einer Mehrzahl von Dämmziegeln (1; 1') nach einem der Ansprüche 1 bis 7 in eine zugeordnete Halteeinrichtung derart nebeneinander in Zeilen, dass deren Verfüllkanäle (6) im Wesentlichen zueinander fluchten, wobei mehrere Zeilen an Dämmziegeln (1; 1') übereinander angeordnet werden und so eine Ziegelwandschicht (32; 32') bilden, wobei der Außenlängssteg (3) mit den Rillen (12) dem tragenden Wandelement (31) zugewandt wird.

13. Verfahren nach Anspruch 12, **dadurch gekennzeichnet, dass** die Dämmziegel (1; 1') beim Anhängen einen Formschluss mit den Halteeinrichtungen herstellen, und insbesondere in hakenförmige Halteeinrichtungen eingehängt werden.

14. Verfahren nach Anspruch 12 oder 13, **dadurch gekennzeichnet, dass** die Dämmziegel (1; 1') zusätzlich mit einem Haftmittel an dem tragenden Wandelement (31) befestigt werden.

## Claims

1. Insulation brick (1; 1') for a multi-layered wall (30; 30') which is formed as a horizontal coring brick, with two outer longitudinal webs (2, 3; 2') and two outer transverse webs (4, 5), which form horizontal joint surfaces, at least one filling channel (6) that extends parallel to the horizontal joint surfaces as well as with at least one accommodation (8) for a support device that is moulded onto the insulation brick (1; 1'),
**characterised in that**,
the filling channel (6) is filled with an insulating material,
a plurality of grooves (12) that extend parallel to the filling channel (6) are formed externally on the outer longitudinal web (3) with the accommodation (8), and
the at least one accommodation (8) has a hook-shaped cross section, such that the accommodation (8) produces a form fit with the holding device.

2. Insulation brick according to claim 1, **characterised in that** an opening of the at least one accommodation (8) is arranged in the area of an outer longitudinal web (3).

3. Insulation brick according to claim 1 or 2, **characterised in that** it possesses a bracing web (7) in the area of the at least one accommodation (8).

4. Insulation brick according to one of claims 1 to 3, **characterised in that** at least one of the outer longitudinal webs (2, 3; 2') is double-walled with a perforation.

5. Insulation brick according to one of claims 1 to 4, **characterised in that** externally on at least one of the outer longitudinal webs (2') at least one joint guide profile (14) is formed which extends parallel to the filling channel (6).

6. Insulating brick according to one of claims 1 to 5, **characterised in that** it has a length between approx. 25 cm and 300 cm, in particular between approx. 50 cm and 100 cm, a height between approx. 12.5 cm and 100 cm, in particular between approx. 25 cm and 50 cm, and a width between approx. 12 cm and 50 cm, in particular between approx. 20 cm and 30 cm.

7. Insulating brick according to one of claims 1 to 6, **characterised in that** the insulating material is of an organic or mineral nature and in particular consists of foamed PUR, foamed EPS, mineral wool, perlite or the like.

8. Multi-layer wall (30; 30') made of a load-bearing wall element (31) and at least one additional brick wall layer (32; 32') for insulation purposes, which is arranged on the inside and / or outside of the load-bearing wall element (31) and fastened there, wherein the brick wall layer (32; 32') is formed from a plurality of insulating bricks (1; 1'),
**characterised in that**,
the insulating bricks (1; 1') are formed according to one of claims 1 to 7, and
that the insulating bricks (1; 1') in rows are individually attached to the load-bearing wall element (31) next to one another by means of holding devices, such that the filling channels (6) are essentially aligned with one another, wherein several lines of insulating bricks (1; 1') are on top of one another and thus form the brick wall layer (32; 32'), wherein the outer longitudinal web (3) with the grooves (12) faces the load-bearing wall element (31).

9. Multi-layer wall according to claim 8, **characterised in that** the holding devices have the shape of profile rails for producing a form fit with the insulating bricks, wherein the horizontally running rails are fastened to the load-bearing wall element (31), and wherein they are preferably hook-shaped profile rails, in particular metal profile rails (33).

10. Multi-layer wall according to claim 8 or 9, **characterised in that** the insulating bricks (1; 1') are additionally fastened on the load-bearing wall element (31) with an adhesive.

11. Building with several walls and a roof, **characterised in that** at least one wall is formed as a multi-layer wall (30; 30') according to one of claims 8 to 10.

12. Method for creating a multi-layer wall (30; 30'), with the steps:
providing a load-bearing wall element (31),
fastening the holding devices to the load-bearing wall element (31), and
hanging a plurality of insulating bricks (1; 1') according to one of claims 1 to 7 next to one another in rows into an associated holding device, such that the filling channels (6) are essentially aligned with one another, wherein several rows of insulating bricks (1; 1') are arranged one above the other and thus form a brick wall layer (32; 32'), wherein the outer longitudinal web (3) with the grooves (12) faces the load-bearing wall element (31).

13. Method according to claim 12, **characterised in that** the insulating bricks (1; 1'), when attached, produce a form fit with the holding devices, and in particular are hooked into hook-shaped holding devices.

14. Method according to claim 12 or 13, **characterised in that** the insulating bricks (1; 1') are additionally fastened on the load-bearing wall element (31) with an adhesive.

## Revendications

1. Brique d'isolation (1; 1') destinée à un mur multicouche (30 ; 30'), laquelle est réalisée sous forme de brique à perforations horizontales, avec deux âmes longitudinales extérieures (2, 3 ; 2') et deux âmes transversales extérieures (4, 5), lesquelles forment des surfaces de joint d'assise, au moins un conduit de remplissage (6) s'étendant parallèlement aux surfaces de joint d'assise, et avec au moins un logement (8) destiné à un dispositif de retenue et surmoulé au niveau de la brique d'isolation (1 ; 1'), **caractérisée en ce que**
le conduit de remplissage (6) est rempli d'un matériau isolant,
une pluralité de rainures (12), lesquelles s'étendent parallèlement au conduit de remplissage (6), sont réalisées sur l'extérieur au niveau de l'âme longitudinale extérieure (3) avec le logement (8), et
le au moins un logement (8) est réalisé avec une section transversale en forme de crochet, de sorte que le logement (8) crée une liaison par complémentarité de forme avec le dispositif de retenue.

2. Brique d'isolation selon la revendication 1, **caractérisée en ce qu'**un orifice du au moins un logement (8) est agencé dans la région d'une âme longitudinale extérieure (3).

3. Brique d'isolation selon la revendication 1 ou 2, **caractérisée en ce qu'**elle présente une entretoise (7) dans la région du au moins un logement (8).

4. Brique d'isolation selon l'une quelconque des revendications 1 à 3, **caractérisée en ce qu'**au moins une des âmes longitudinales extérieures (2, 3 ; 2') est réalisée à double paroi avec une perforation.

5. Brique d'isolation selon l'une quelconque des revendications 1 à 4, **caractérisée en ce qu'**au moins un profilé de guidage de joint (14), lequel s'étend parallèlement au conduit de remplissage (6), est réalisé extérieurement au niveau d'au moins une des âmes longitudinales extérieures (2').

6. Brique d'isolation selon l'une quelconque des revendications 1 à 5, **caractérisée en ce qu'**elle présente une longueur entre environ 25 cm et 300 cm, en particulier entre environ 50 cm et 100 cm, une hauteur entre environ 12,5 cm et 100 cm, en particulier entre environ 25 cm et 50 cm, et une largeur entre environ 12 cm et 50 cm, en particulier entre environ 20 cm et 30 cm.

7. Brique d'isolation selon l'une quelconque des revendications 1 à 6, **caractérisée en ce que** le matériau isolant est de nature organique ou minérale et consiste notamment en de la mousse PU, de la mousse EPS, de la laine minérale, de la perlite ou similaire.

8. Mur multicouche (30 ; 30') constitué d'un élément mural porteur (31) et d'au moins une couche murale de briques (32 ; 32') supplémentaire destinée à l'isolation, laquelle est agencée à l'intérieur et/ou à l'extérieur de l'élément mural porteur (31) et fixée à celui-ci, dans lequel la couche murale de briques (32 ; 32') est réalisée à partir d'une pluralité de briques d'isolation (1 ; 1'),
**caractérisé en ce que** les briques d'isolation (1; 1') sont réalisées selon l'une quelconque des revendications 1 à 7, et
les briques d'isolation (1; 1') sont accrochées individuellement en rangées les unes à côté des autres au niveau de l'élément mural porteur (31) au moyen de dispositifs de retenue de telle manière que leurs conduits de remplissage (6) sont essentiellement alignés les uns par rapport aux autres, dans lequel plusieurs rangées de briques d'isolation (1; 1') sont superposées et forment ainsi la couche murale de briques (32 ; 32'), dans lequel l'âme longitudinale extérieure (3) avec les rainures (12) est tournée vers l'élément mural porteur (31).

9. Mur multicouche selon la revendication 8, **caractérisé en ce que** les dispositifs de retenue sont configurés sous forme de rails profilés permettant de créer une liaison par complémentarité de forme avec les briques d'isolation, dans lequel lesdits dispositifs de retenue sont fixés sur l'élément mural porteur (31) de manière à s'étendre horizontalement, et dans lequel lesdits dispositifs de retenue sont réalisés de manière préférée sous la forme de rails profilés en forme de crochet, en particulier de rails profilés métalliques (33).

10. Mur multicouche selon la revendication 8 ou 9, **caractérisé en ce que** les briques d'isolation (1; 1') sont en outre fixées à l'élément mural porteur (31) au moyen d'une colle.

11. Bâtiment avec plusieurs murs et un toit, **caractérisé en ce qu'**au moins un mur est réalisé sous forme de mur multicouche (30; 30') selon l'une quelconque des revendications 8 à 10.

12. Procédé de création d'un mur multicouche (30 ; 30'), comprenant les étapes consistant à :
fournir un élément mural porteur (31),
fixer des dispositifs de retenue sur l'élément mural porteur (31), et
accrocher une pluralité de briques d'isolation (1; 1') selon l'une quelconque des revendications 1 à 7 les unes à côté des autres en rangées à un dispositif de retenue associé, de telle manière que leurs conduits de remplissage (6) sont essentiellement alignés les uns par rapport aux autres, dans lequel plusieurs rangées de briques d'isolation (1; 1') sont agencées de manière superposée et forment ainsi une couche murale de briques (32 ; 32'), dans lequel l'âme longitudinale extérieure (3) avec les rainures (12) est tournée vers l'élément mural porteur (31).

13. Procédé selon la revendication 12, **caractérisé en ce que** les briques d'isolation (1 ; 1') créent une liaison par complémentarité de forme avec les dispositifs de retenue lors de l'accrochage et sont suspendues, en particulier à des dispositifs de retenue en forme de crochet.

14. Procédé selon la revendication 12 ou 13, **caractérisé en ce que** les briques d'isolation (1 ; 1') sont en outre fixées à l'élément mural porteur (31) avec une colle.
